Europäisches Patentamt

European Patent Office

Office européen des brevets

(19)

(11) Publication number: **0 166 482**
**A2**

(12)

# EUROPEAN PATENT APPLICATION

(21) Application number: **85200907.5**

(51) Int. Cl.⁴: **C 01 B 33/02, C 22 B 34/10**

(22) Date of filing: **10.06.85**

(30) Priority: **26.06.84 US 624574**

(43) Date of publication of application: **02.01.86**
**Bulletin 86/1**

(84) Designated Contracting States: **AT BE CH DE FR GB IT LI LU NL SE**

(71) Applicant: **AGIP S.p.A., Piazzale E. Mattei 1, I-00144 Rome (IT)**
Applicant: **ANIC S.p.A., Via Ruggero Settimo, 55, I-90139 Palermo (IT)**

(72) Inventor: **Sancier, Kenneth M., 561 Berkeley Avenue, Menlo Park, CA 94025 (US)**
Inventor: **Sanjurjo, Angel, 15010 Penitencia CK Road, San Jose, CA 95132 (US)**
Inventor: **Emerson, Robert M., 265 Warren Avenue, San Leandro, CA 94577 (US)**

(74) Representative: **Roggero, Sergio et al, Ing. Barzanò & Zanardo Milano S.p.A. Via Borgonuovo 10, I-20121 Milano (IT)**

(54) Improved process for recovering metals from the corresponding metal halides.

(57) An improved process is described for the recovery of silicon or a transition metal from the corresponding metal halide.

EP 0 166 482 A2

ACTORUM AG

0166482

## Disclosure

A process for producing low cost highly pure silicon and group IVB transition metals is described in U.S. 4,442,082, which is incorporated by reference.

That process is primarily exemplified by the description of specific reactions that produce silicon.

It is known that elements such as silicon and transition metals of more than sufficient purity can be produced within the corresponding economic requirements from the metallic reduction of a reactant element's fluoride. Preferably, in regard to the present process, the product element is silicon and in that case silicon fluoride is prepared from an aqueous solution of fluosilicic acid, a low cost waste by-product of the phosphate fertilizer industry by treatment with a metal fluoride which precipitates the corresponding fluosilicate. This salt is filtered, washed, dried and thermally decomposed to produce the corresponding silicon tetrafluoride and metal fluoride which can be recycled to the precipitation step. The silicon tetrafluoride is then reduced by a suitable reducing metal of the group IA, IIA or IIIA of the Mendelean periodic Table and the products of the reaction are elemental silicon and a metal fluoride of groups IA, IIA and IIIA which are treated to extract the silicon.

The process in one form is described in detail in an article entitled Silicon by Sodium Reduction of Silicon Tetrafluoride authored by A.Sanjurjo, L. Nanis, K. Sancier, R. Bartlett and V. J. kapur in the Journal of the Electrochemical Society Vol. 128, No. 1, January 1981 and the subject matter of the article is specifically incorporated herein by reference.

The present invention is directed to the part of the process which deals with the manner of continously or intermittently removing the products of reaction (Si and NaF) produced by the reaction between $SiF_4$ and an alkali reducing metal (eg. Na) from a reactor or container and the subsequent separation of elemental silicon product.

In order to appreciate the problem of carrying out the reaction, consider (as noted above) that when liquid Na At 150°C contacts $SiF_4$, a rapid exothermic reaction takes place. The Na burns in the $SiF_4$ atmosphere to produce Si and NaF. Since Na melts at 98°C, in principle, liquid Na at temperatures below 140°C can safely be drop-fed into a reactor kept under a constant $SiF_4$ pressure. The reaction takes place at the bottom of the reactor which is kept at temperatures above 200°C.

Further, the reaction products produced by the systems disclosed in the patents are in a form that is difficult to remove from the reactor or container in which they are formed or stored. In view of the stringent purity requirements for solar grade silicon, separation and removal techniques that tend to introduce impurities are distinctly disadvanteageous. Metals such as Ti also have stringent purity requirements. High impurity contents result in a loss of certain mechanical properties.

The present invention is specifically concerned with the separation of the reaction products produced by reaction of Na and $SiF_4$. The reaction is performed in a container configured in such a manner that at least a portion of the sodium fluoride is melted and removed from the reaction mixture.

The present invention is concerned with an improved process for the recovery of elemental silicon or transition metals such as titanium zirconium or hafnium from a reaction mixture which contains a metal halide and the elemental form of Si or a transition metal. The process comprises (a) maintaining the reaction mixture in a container at a temperature that liquifies at least a portion of said metal halide; (b) removing at least a portion of the liquid metal halide from said container; (c) removing from said container with pressure or vibration a portion of the mixture from which a portion of the metal halide has been removed; and (d) recovering the balance of said silicon or transition metal from said reaction mixture.

Accordingly, it is a primary object of this invention to provide an improved process for the removal of mixtures of silicon or a transition metal and metal halides from a container and recovery of the elemental Si or transition metals from a mixture which comprises a metal halide and the elemental Si or transition metal.

It is a further object to provide an improved process for the removal of reaction mixture of elemental Si or transition metals, and metal halides from a container and the recovery of such elemental Si or transition metals from a reaction mixture which comprises a metal halide and elemental Si or transition metals by the use of elevated temperatures to separate a part of the metal halide.

It is a further object of this invention to provide an improved process for the recovery of reaction mixtures which comprise a metal halide and elemental silicon or transition metal from a container by means that include a step wherein mechanical force is applied to the container which holds the reaction mixture.

These and other objects will become apparent from a review of the present specification.

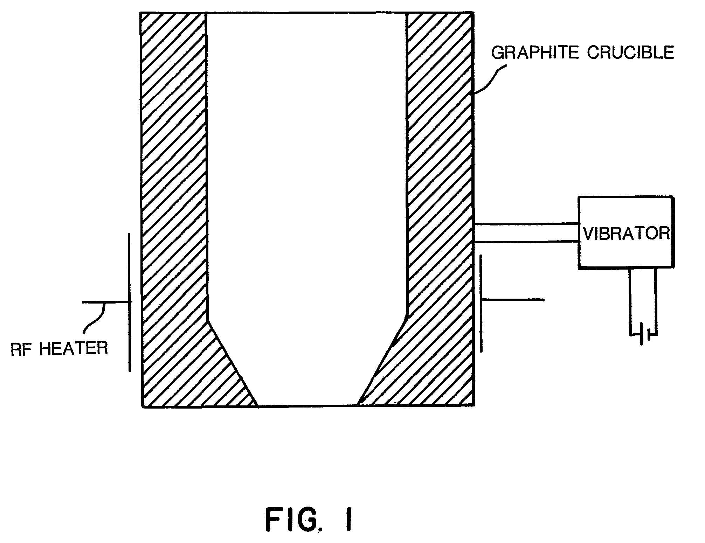

FIG. 1 is a cross-section of an apparatus that may be utilized in practice of the present invention.

The improved recovery process of the invention is carried out in any suitable apparatus which may be used to contain the hot reaction mixture that is obtained by the reduction of a reactant: silicon halides or transition metal halides with a reducing metal. The apparatus may be an integral zone of a reactor in which the reduction reaction is carried out batchwise or continuously. It may be a separate apparatus which is used only a separator. The essential feature is that the apparatus should be provided with heating means to liquefy at least a portion of the product metal halide in the reaction mixture and optionally have means for permitting selective removal of at least a portion of liquid product metal halide while retaining the Si or transition metal product and the balance of the product metal halide.

The process is based on the fact that the product metal halide is a low viscosity liquid at a temperature below the temperature at which the elemental Si or transition metal product exhibits any substantial flow properties.

Hereinafter particular reference will be made to silicon but it should be understood that the invention is not so limited. In the case of sodium fluoride and elemental silicon, the melting points are about 988°C and 1412°C. This temperature differential permits sufficient heat to be applied to permit liquid sodium fluoride to be drained off through any suitable opening, in substantially pure form free of silicon particles.

Heat may be applied by means such as resistance heaters, or more preferably by radio frequency induction heating.

Temperatures of 1000°C to 1400°C may be used with mixtures of silicon and sodium fluoride, and more preferred temperatures are from 1050°C to 1250°C. The substantially pure sodium fluoride may be recycled upstream in an integrated production facility to serve as a source for sodium fluoride that may be used to make fluosilicate. The purity of the recycled sodium fluoride is a special advantage that can be utilized in making sodium fluosilicate.

The present invention also contemplates the use of mechanical force to aid in the removal of reactants from the container. The mechanical force may be applied directly by electricity or pneumatically activated pistons, rods or other suitably shaped contact means directly to the reactants to expel said reactants. Alternatively indirect mechanical force may be applied by electrically or pneumatically activated vibrators, shakers or other agitator means. A further means may be through the use of positive or negative pressure which may be applied to cause all or a portion of the reactants to be ejected from the container in which they are held.

Argon gas may be used for this purpose or a vacuum may be applied.

A preferred, but not exclusive, embodiment of the reactor design is shown in FIG. 1 for better illustration.

In the case of the reduction of silicon tetrafluoride with sodium, the sodium fluoride is obtained in a weight ratio of 6:1 of sodium fluoride to silicon. Of the six parts of sodium fluoride present, it is possible to remove about a maximum of five parts of liquid sodium fluoride from the container. Subsequent removal is done by aqueous leaching or by melt separation.

The size of the orifice through which the sodium fluoride is selectively removed is important. Experimental data show that an orifice of 0.1 cm in diameter will prevent the flow of liquid sodium fluoride at 1425°C while an orifice of 0.26 cm in diameter is necessary for molten sodium fluoride to flow. For orifice diameters of 0.2 cm or less very little NaF flowed even at temperatures of 1450°C. When both Si and NaF were present, NaF did not flow as well, however, most of the NaF (80%) discharged when the orifice diameter was 0.32 cm. An orifice size of 1-4 cm may be advantageously utilized, however depending on the geometric configuration of the container, larger diameters may be utilized. The rest of the NaF remained attached to the silicon pool and to the graphite walls even when temperatures exceeded the melting point of silicon (1410°C).

The following examples are included to illustrate but not to limit the invention.

### Example 1

A mixture of sodium fluoride and silicon was placed in a graphite crucible and pressure was applied using two different methods: mechanically with a graphite rod and with argon gas to the top of the reactor.

In experiment 1, a graphite rod having a diameter of 0.9 cm was pressed down through a graphite crucible 7.5 cm high by 3 cm in diameter having a lower portion constricted to an outlet of 2 cm in diameter by tapering the internal walls inwardly at an angle of 130°. At a temperature of 1200°C, the rod was passed down into a 2:1 mixture of sodium fluoride and silicon causing the slurry product to flow out through the orifice into a lower reception crucible.

In experiment 2, a rod having a lower flat surface of 2.5 cm in diameter was used, in the same crucible as in experiment 1 with the same material used in experiment 1, at a temperature of about 1400°C. The material obtained from the crucible was substantially pure sodium fluoride and the silicon was retained in the crucible.

In experiment 3, argon was used in the same crucible that was used in experiment 1 but the temperature was 1100°C. A pressure of 0.07 atm of argon was used. The use of gas pressure was successful in discharging the product but the product around the central axis was discharged preferentially with respect to the product near the walls.

Experiments 4 and 5 were carried out using a vacuum source with the same crucible that was used for experiment 1. A vacuum of 100 mm of Hg was applied in both experiments and liquid sodium fluoride was discharged while the silicon was retained.

## Example 2

Experiments were carried out with mixtures of sodium fluoride and silicon in the same type of crucible that was used in example 1 except that the orifice varied and the angle of the orifice was as stated. Vibration was applied from an external vibrator through a graphite shaft that was in contact with the top of the crucible.

| Run | Orifice | Angle | Temp. °C | Result |
|-----|---------|-------|----------|--------|
| A | 2.2 cm | 150°C | 1000 | Si and NaF discharged |
| B | 0.9 cm | 150°C | 1200 | Si and NaF discharged |
| C | 0.9 cm | 150°C | 1000 | Si and NaF discharged |
| D | 0.9 cm | 150°C | 1000 | Si and NaF discharged |
| E | 0.9 cm | 150°C | 1375 | Si and NaF discharged |

The discharged slurries dripping into the lower reception crucible behaved like liquids that wet graphite walls.

This technique was used in a multiple charge-discharge cycle with the crucible being reloaded and the process repeated. Five consecutive cycles were run in this manner.

## Example 3

The procedure of example 2 was scaled up and was run in a graphite crucible 14.5 cm high by 4 cm in diameter having a lower portion constructed to an outlet of 1.9 cm by tapering the internal walls inwardly at an angle of 150°. The procedure was run six times and each time the mixture was discharged.

| Run | Approximate Temp.°C | Results |
|-----|---------------------|---------|
| A | 1000 | silicon (solid) and sodium fluoride (liquid) discharged. |
| B | 1000 | 90% of the silicon (solid) and sodium fluoride (liquid) discharged some remained on walls; |

| | | |
|---|---|---|
| C | 1240 | 70% of silicon (solid) and sodium fluoride (liquid) discharged some silicon melted on top and formed small spheres. |
| D | 1490 | 100% of silicon (liquid) and sodium fluoride (liquid) discharged. |
| E | 1400 | 100% of silicon (liquid) and sodium fluoride (liquid) discharged. |
| F | 1000 | 143g of reaction product was discharged and 26g was retained in the crucible. |

The examples show that with the use of the proper temperature it is possible to discharge slurries of silicon powder in molten sodium fluoride with partial separation of the molten sodium fluoride using pressure or vibration. If the temperature is raised at a high rate a plug of silicon-sodium fluoride may be discharged. Temperatures of above about 1410°C will discharge molten silicon and molten sodium fluoride.

Aqueous leaching may be used to selectively remove the water soluble sodium fluoride from the insoluble silicon although other separation techniques may be utilized.

- 1 -

0166482

<u>C l a i m s</u>

1. In a process for the reduction of a tetrahalide of silicon, titanium, zirconium or hafnium with a reducing metal to obtain elemental silicon, titanium, zirconium or hafnium, the improvement which comprises recovering free silicon, titanium, zirconium or hafnium from a mixture comprising a metal halide and elemental silicon, titanium, zirconium or hafnium by the use of the steps of:

    (a) maintaining said mixture in a container at a temperature that liquefies at least a portion of said metal halide;

    (b) removing at least a portion of the liquid metal halide from said container;

    (c) removing from said container with force, pressure or vibration a portion of the mixture from which a portion of the metal halide has been removed; and

    (d) recovering the said elemental silicon, titanium, zirconium or hafnium.

2. The process of claim 1 wherein the silicon is recovered from a mixture comprising silicon and sodium fluoride.

3. The process of claim 2 wherein pressure is applied by mechanical means to remove the reaction mixture.

4. The process of claim 2 wherein pressure is applied by gaseous means to remove the reaction mixture.

5. The process of claim 2 wherein vibration is used to remove the reaction mixture.

6. The process of claim 2 wherein sufficient heat is applied to liquefy the sodium fluoride without liquefying the silicon.

7. The process of claim 2 wherein the process is carried out batchwise.

8. The process of claim 2 wherein the process is carried out continuously.

9. In a process for the reduction of silicon tetrafluoride with sodium, the improvement which comprises from a mixture comprising silicon and sodium fluoride recovering elemental silicon by the use of the steps of:

(a) maintaining said mixture in a container at a temperature that liquefies part of the sodium fluoride;

(b) removing at least a portion of the sodium fluoride;

(c) removing from said container with vibration a portion of the mixture from which a portion of the metal halide has been removed;

(d) recovering the elemental silicon from said mixture by aqueous leaching.

10. The process of claim 9 wherein the container receives the mixture of sodium fluoride and silicon from a reaction zone.

11. The process of claim 10 wherein the container has an opening of from 1 cm to 4 cm to permit removal of liquid sodium fluoride.

GRAPHITE CRUCIBLE

VIBRATOR

RF HEATER

FIG. I

0166482